# EUROPEAN PATENT SPECIFICATION

(11) **EP 1 737 626 B1**
(45) Date of publication and mention of the grant of the patent: **18.06.2008**
(21) Application number: 05718664.5
(22) Date of filing: 08.04.2005
(51) Int. Cl.: B26B 19/40

(54) **PERSONAL CARE APPLIANCE FOR TREATMENT OF A BODY PART WITH MEANS FOR DISPENSING AN ADDITIVE ONTO SAID BODY PART TO BE TREATED**
GERÄT ZUR PERSÖNLICHEN PFLEGE ZUR BEHANDLUNG EINES KÖRPERTEILS MIT MITTELN ZUR ABGABE EINES ADDITIVS AUF DEN ZU BEHANDELNDEN KÖRPERTEIL
APPAREIL DE SOINS PERSONNELS POUR LE TRAITEMENT D'UNE PARTIE DU CORPS, AVEC MOYENS POUR DISTRIBUER UN ADDITIF SUR CETTE PARTIE DU CORPS A TRAITER

(30) Priority: 14.04.2004 EP 04101521
(43) Date of publication of application: 03.01.2007
(73) Proprietor: Koninklijke Philips Electronics N.V., 5621 BA Eindhoven (NL)
(72) Inventor: EISINGA, Redmer, 5656 AA Eindhoven (NL); OOSTERHUIS, Jan, R., 5656 AA Eindhoven (NL)
(74) Representative: van der Veer, Johannis Leendert
(86) International application number: PCT/IB2005/051153
(87) International publication number: WO 2005/099977

(56) References cited:
- WO-A-03/068466
- US-A- 4 031 618
- US-A- 5 337 478
- US-A- 6 126 669

## Description

The invention relates to a personal care appliance for treatment of a body part, such as skin, teeth or hair, comprising a reservoir for holding an additive, dispense means for dispensing said additive onto the body part to be treated, and control means for controlling the dispense means, wherein the control means are arranged for automatically controlling the dispense means to dispense the additive according to a predetermined dispense profile, which profile is based on a user's needs and/or the conditions under which the appliance is used.

Such an appliance is known from US patent 6,126,669. This known appliance concerns a shaving apparatus comprising a reservoir for holding an additive, in particular a shaving lotion or gel, and dispense means including a pump for dispensing said additive to the skin. The dispense means can be operated manually, by pressing a button, or electromechanically, by means of a motor. In the latter case control means can be provided for controlling the motor. In the known appliance, these control means comprise a power switch to start and shut down the motor and/or a timer for periodically activating the motor.

Manual activation of the dispense means offers the advantage that a user can readily adapt the dispense rate according to his needs by changing the frequency or duration when depressing the button. However, the repeated or prolonged depressing of the button may be straining to the user and moreover interfere with the shaving movement. Electromechanical activation frees the user from having to operate the dispense means himself, but deprives him from the freedom of adjusting the additive supply to his needs.

US patent 4,031,618 discloses an electric dry shaver having a shaving head assembly provided with reel-type cutters, a vacuum system within the casing of the shaver for drawing individual hairs into cutting position and for exhausting cut hairs from the casing, and integral lotion dispensing means for dispensing lotion automatically to the shaving head assembly. The lotion dispensing means comprise a lotion receptacle closed by a flexible membrane. The membrane is actuated by a rotating cam which is driven by the shaver's motor via an impeller wheel of the vacuum system. Actuation of the membrane by the rotating cam causes a pumping action, under the influence of which the lotion is pumped out of the receptacle and dispensed to the shaving head assembly.

It is an object of the invention to provide a personal care appliance of the above-described type, wherein the above-mentioned disadvantages are avoided, while maintaining the advantages thereof. To that end a personal care appliance according to the present invention is characterised in that selection means are provided for enabling a user to select a predetermined dispense profile and/or to input specific data on the basis whereof the automatic control means can select and/or adjust a predetermined dispense profile.

With an appliance according to the invention the additive can be dispensed automatically, tailored to a consumer's needs. The automatic additive control relieves the user of having to dispense the additive himself and hence increases the ease of use of the appliance. Moreover, the predetermined dispense profile allows the right amount of additive to be dispensed at the right moment, thereby ensuring optimum treatment conditions and preventing waste of additive.

In this description a dispense profile is understood to be a profile defming the desired dispense rate φ or a related parameter, such as moistness of the body part to be treated, friction between the appliance and said body part, as a function of time or a related parameter, such as a pump pulse or motor frequency of the appliance. The dispense rate may for instance have a constant value or slightly increase or during a first stage of the treatment and subsequently gradually decrease, e.g. linear or progressively, to a lower constant value or zero. Alternatively, the dispense rate can vary periodically, wherein the period may be constant or vary during the treatment session. The specific shape of the dispense profile may depend on many parameters, for instance personal preferences of the user and specific treatment particulars and conditions such as the body part to be treated and/or the additive used.

Furthermore, the term 'predetermined' is understood to mean 'determined before a treatment session'. This does however not preclude that the predetermined dispense profile can be altered or overruled during operation through manual intervention of the user.

Preferably, the appliance comprises sufficient memory to store several predetermined dispense profiles, i.e. for different users and/or different uses. These predetermined dispense profiles may be pre-stored in the appliance by the manufacturer or freely programmable by a user. A combination is also possible, whereby the appliance is pre-programmed with one or a few basic dispense profiles with some freely adjustable parameters, allowing these basic dispense profile to be at least partially adapted to a user's needs. Thus, the appliance can be provided with a wide variety of profiles, rendering the appliance applicable for a broad scope of situations and users. At the start of each session the most appropriate dispense profile can be selected by the user or by the automatic control means, based on information inputted by the user.

In a highly preferred embodiment the automatic control means are designed to be self learning, meaning that new dispense profiles can be 'taught' to the automatic control means by simply letting a user manually operate the control means during one or more trial runs. These manual operation data are stored and subsequently reproduced by the automatic control means. As such, new dispense profiles can be easily entered and will be exactly tailored to the specific user's needs.

In yet another preferred embodiment, manual control means are provided for manually controlling the dispense means.

With such manual control means a user can manually operate the dispense means, thereby enabling the user to adjust, complement or overrule the automatic control means at all times, for instance in case of unforeseen changes in the treatment conditions. Furthermore, said manual control means can be used when teaching the control means a new dispense profile as described above.

In further elaboration, an appliance according to the present invention is characterized in that interruption means are provided, for having the automatic control means either restart or resume a dispense profile after an interruption in the execution of said profile.

Thanks to such interruption means a user may temporarily interrupt the treatment, after which the dispense program may resume where it left. If the interruption is longer than a pre-set value, this will be seen as a new treatment session and the dispense program will start from the beginning. The pre-set value can be programmed in the control means and is preferably adjustable to a specific user's habits with regard to the frequency with which he uses the appliance. Alternatively, the interruption provision can be embodied in a switch to be operated by the user. In the latter case the interruption may have an unlimited duration.

To realise the predetermined dispense profile, the control means may act on various parameters of the dispense means, depending on, amongst others, the applied control strategy (e.g. feedback, feedforward control) and the specific configuration of the dispense means. The latter may for instance comprise a pump with controllable frequency and/or stroke, or a valve with controllable opening, or a combination of both. Furthermore, it is possible to control the dispense rate directly or indirectly, by controlling a backflow to the reservoir.

In a simple and therefore preferred embodiment, an appliance according to the invention is characterised in that the control means furthermore comprise a timer, generating time units of a specific length, wherein the or each dispense profile is expressed as a function of said time units, and wherein the dispense rate is controlled by alternately activating and deactivating the dispense means during a number of said time units as determined by the dispense profile.

By providing the control means with a timer, and expressing the predetermined dispense profile as a function of time units generated by said timer, a very simple yet effective feedforward control is possible, wherein the dispense means are alternately activated at full rate during a certain number of said time units and subsequently deactivated during another number of said time units. Such a dispense profile can be easily taught to the automatic control means, by counting the number of time units during which a user activates the manual operating means during a self learning trial run, as described before. To that end, the timer is preferably automatically activated when the user activates the manual operating means. Alternatively, the timer may be activated upon powering the personal care appliance, or by a separate switch.

In further elaboration, the appliance may comprise a switch for activating and deactivating the automatic control means, manually or through contact with the body part to be treated, for ensuring that the dispensing of additive does not automatically start upon activating the appliance, but only for instance when expressly activated by a user or upon contact with the body part to be treated. Such means may for instance comprise a switch, which can be incorporated in or combined with the earlier described interruption means or the manual control means.

Furthermore, communication means may be provided, for informing the user regarding for instance the available dispense profiles, the selected profile, the progress thereof during operation and/or the amount of additive left in the reservoir.

In yet another preferred embodiment, the additive to be dispensed is contained in a disposable cartridge, which can be easily replaced when empty. The cartridge is preferably designed in such way that all parts that come in contact with the additive are disposable, thereby minimising contamination and the need of frequent cleaning of the appliance.

The above and other advantageous embodiments of the invention are set forth in the dependent claims.

To explain the invention in more detail, exemplary embodiments of a personal care appliance will hereinafter be described with reference to the accompanying drawings, wherein:
Fig. 1 is a cross sectional view of a shaver with dispense means according to the invention;
Fig. 2 shows the shaving head of the apparatus of FIG 1, in cross sectional view;
Fig. 3 is a graph illustrating the influence of the application of a shaving gel onto the friction between the shaving head and the skin of a user;
Fig. 4 is an enlarged view of FIG 1, showing the reservoir with a cartridge and a pump, as well as alternative activating means for activating said pump;
Fig. 5 shows an alternative embodiment of a pump; and
Fig. 6 shows four possible dispense profiles.

In this description the invention is explained in view of a hair removing apparatus. However, it is to be understood that the invention is not limited to such apparatus, but applicable in any other personal care appliances for treatment of a body part, wherein an additive is dispensed to enhance said treatment, such as a toothbrush or hairstyler, wherein the additive to be dispensed may for instance comprise a cleaning or polishing substance, steam, a shaving gel or disinfecting agent, perfume or a hairstyling product, such as wax, shampoo or a colouring agent.

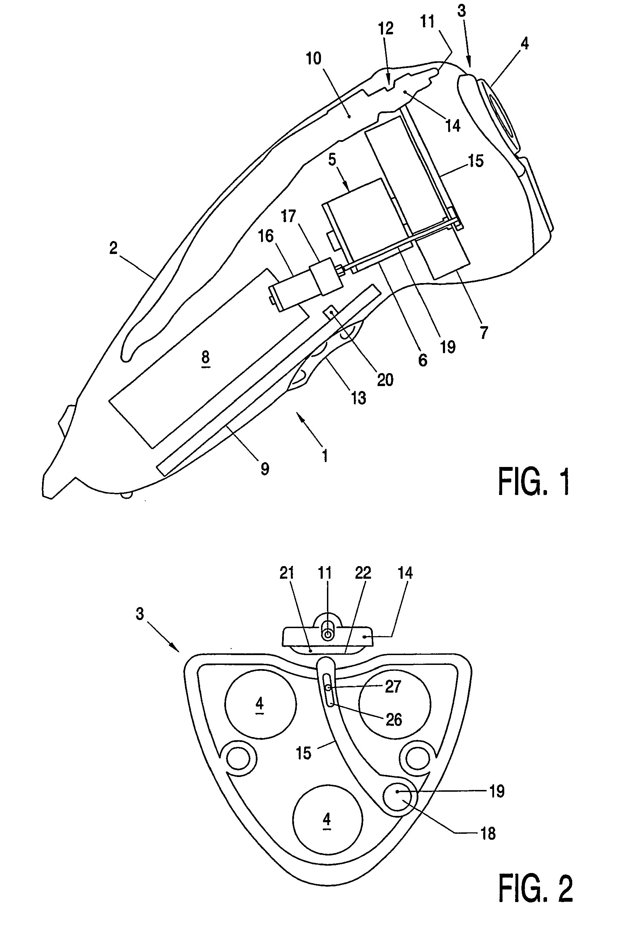

The hair removing apparatus 1 shown in FIG. 1 comprises a housing 2 and a shaving head 3, which is hinged or otherwise removably connected to the housing 2. The shaving head 3 is provided with cutters 4, driven by a drive system 5, which is accommodated in the housing 2. The drive system 5 comprises a motor 6, transmission means 7 (shown schematically only), a power supply 8 such as a battery or power cord, a circuit 9 and a power switch 13, which may have other functions as well, as will be discussed later.

The housing 2 furthermore houses a reservoir 10 for holding an additive, such as a shaving gel or lotion. The reservoir 10 is in fluid connection with a discharge opening 11 in or near the shaving head 3. Dispense means 12 are provided for transporting the additive from the reservoir 10 to the discharge opening 11. When empty, the reservoir 10 may be refilled, preferably with a disposable cartridge.

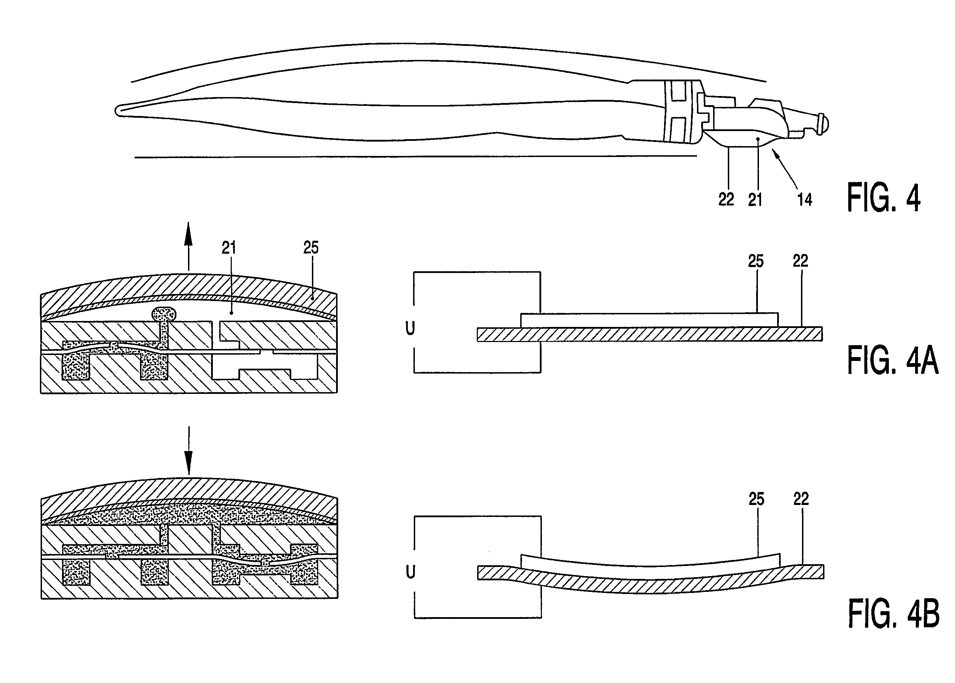

The dispense means 12 illustrated in FIGs. 1 and 2 comprise a pump 14, in particular a diaphragm pump (see FIG. 2 and 4) and activating means 15 for activating the pump 14. Diaphragm pumps are known per se and will therefore only be described insofar needed to understand the functioning of the appliance 1. The diaphragm pump comprises a pump chamber 21 having a flexible wall portion 22, a one-way inlet (not shown) connecting to the reservoir 10 and a one-way outlet (not shown) connecting to the discharge opening 11. The activating means 15 comprise, in the embodiment shown in FIG. 2, a slightly curved push member that near one end is coupled to a drive shaft 19 of a motor 16 via an excenter 18, and near its other end is provided with a slotted guide hole 26 in which a fixed guide pin 27 engages. This configuration transforms the rotary motion of the drive shaft 19 into a reciprocating movement of the push member 15, thereby causing the flexible wall portion 22 of the pump chamber 21 to be alternately compressed and flexed. This generates an overpressure during which the chamber 21 is emptied, respectively a sub-pressure during which the chamber 21 is filled with fresh additive supply from the reservoir 10.

In the illustrated embodiment, the activating means 15 are driven by a second motor 16 via second transmission means 17. It will be clear that in an alternative embodiment, the activating means 15 and cutters 4 can be driven by a single motor 6. Such single motor is preferably combined with two sets of transmission means, with independently adjustable transmission ratios, so that the rotation speed of the cutters 4 and the frequency of the activating means 15 may be independently varied with respect to each other.

It will furthermore be clear that the activating means 15 shown in FIGs. 1 and 2 can be embodied in many different ways, for instance by means of a piezoelectric element 25 as shown in FIG. 4, placed against the flexible wall portion 22 of the pump chamber 21. This element 25 is designed such, that in powered condition it bends towards the pump chamber 22, as illustrated in FIG. 4A,B, thereby depressing the wall portion 22 and evoke pumping action. Alternatively, the piezoelectric element 25 may be arranged to act on a flexible part of the reservoir 10 or a cartridge disposed therein (not shown). Piezoelectric means 25 have good dynamic characteristics (short response time), can be accurately controlled by a suitable electric control signal and require little space, and may therefore advantageously applied in relatively small appliances, such as a shaver.

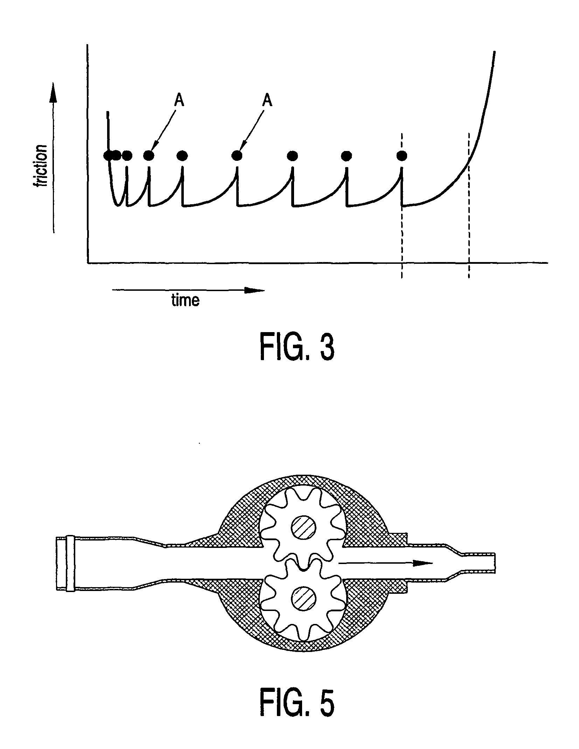

The skilled person will appreciate that the diaphragm pump 14 can be replaced by different types of pumps, such as for instance a gear pump as shown in FIG. 5 or a piston. The activating means 15 may be adapted accordingly or even be eliminated all together, such as in the case of the gear pump of FIG. 5.

The skilled person will furthermore appreciate that the pump may be replaced by other pressurising means, maintaining a sufficient pressure in the additive reservoir 10, and a valve allowing a desired amount of additive to be dispensed from the reservoir. Furthermore, a combination is possible, wherein the dispense means 12 comprise both a pump 14 and a valve, so that the release of additive may be controlled by adjusting the pump frequency, stroke and/or the valve opening. In yet another embodiment, a return conduit may be provided between the discharge opening 11 and the reservoir 10, allowing additive to be pumped round. In that case, the amount of additive leaving the discharge opening 11 may be influenced by controlling the backflow to the reservoir 10.

The apparatus 1 furthermore comprises control means 20, for controlling the dispense means 12 into releasing the desired amount of additive, according to a predetermined dispense profile Sₓ. Said control means 20 preferably comprise a micro controller, such as for instance a micro processor or an ASIC (Application Specific Integrated Circuit), connected to circuit 9 and memory means for storing one or more dispense profiles Sₓ.

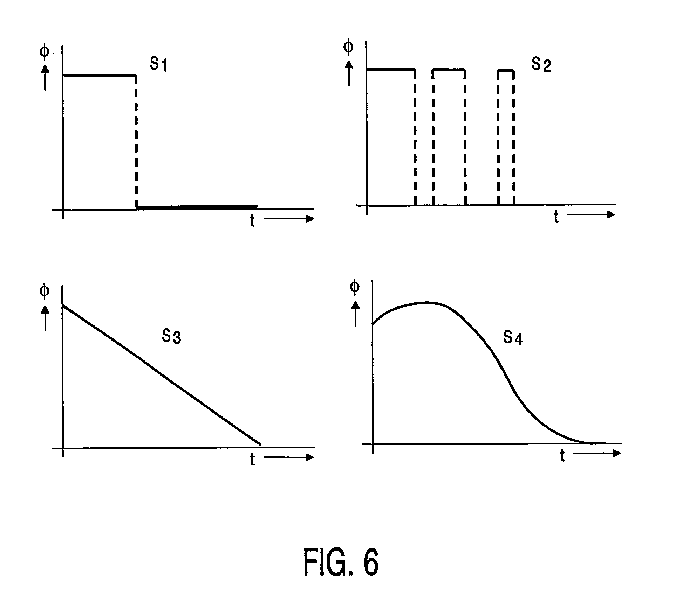

The dispense profiles Sₓ can be established on the basis of theoretical knowledge or empirical data regarding the influence of the dispense rate on the treatment carried out with the personal care appliance. An example of such knowledge is for instance reflected in FIG. 3, showing how the friction between a shaving head (3) and the skin of a consumer changes upon application of shaving gel during a shaving session. As can be seen in FIG. 3, at the start of the shaving session the friction is relatively high. Upon application of a first doses of shaving gel (indicated by a black dot A) the friction drops quite considerably and subsequently gradually increases again to its initial high value. Upon reaching this initial value, a new doses of shaving gel is applied, causing the friction level to drop again and subsequently to rise again. As this pattern is repeated, it is seen that the time needed for returning to the original high friction level increases during the shaving session, and near the end of the session has a more or less constant value. From this information a dispense profile can be derived that will keep the friction satisfactory low during the shaving session. This dispense profile Sₓ should have an initially high dispense rate that gradually decreases towards a constant lower value, as illustrated by profile S₁ in FIG. 6.

The dispense profile S₁ as derived above, can be pre-programmed in the appliance 1 by the manufacturer. However, it will be clear that the required dispense profile Sₓ may differ per situation, for instance depending on the shaving conditions (e.g. the rotation speed of the cutters, the number of cutters, the climate and the type of additive used) or the user (e.g. the condition of the body part, the treatment habits of the user, such as the frequency of using the appliance, the applied (shaving) force, etc.). To cater for these different situations and/or users, the control means 20 can be equipped with a number of dispense profiles S₁₋₄ (see FIG. 6), predetermined for particular, known situations in the way described above. At the start of each treatment session the most appropriate dispense profile Sₓ can be selected, by letting the user choose between the available profiles, for instance by means of a touch screen or a switch, e.g. power switch 13 which to that end may have a dual function.

In a preferred embodiment the predetermined dispense profiles Sₓ are stored parametrically, that is as a function of one or more freely adjustable parameters, allowing the profiles to be adapted to specific user's needs, at least to some extent. In this case, the user may at the start of a session input some key information, such as intended use, properties of the body part to be treated, preferred type of treatment and/or personal preferences, on the basis whereof the control means 20 can subsequently select a suitable dispense profile Sₓ and adapt this profile to the given situation by tuning the parameters.

In a highly preferred embodiment the control means 20 are freely programmable, so that the user may input its own desired dispense profile Sₓ. To that end, the control mean 20 are preferably of self learning design, allowing a user to simply input his personal dispense profile Sₓ by performing one or a few trial runs during which he operates the dispense means himself, e.g. via switch 13. These manually given instructions are stored as a function of time (or a parameter related thereto, for instance the motor pulses), so that they can be reproduced by the control means 20, thereby forming a tailor made dispense profile Sₓ that fully complies with the user's wishes. It will be clear, that in this way, various dispense profiles Sₓ can be taught to the control means 20, e.g. to cater for different (shaving) conditions or different users.

The control means 20 can be implemented with various control strategies, all intended to let the actually outputted dispense rate φ as much as possible approach the predetermined dispense profile Sₓ. In a most simple and therefore preferred embodiment, the control strategy may be a feedforward strategy whereby the control means 20 power the motor 16 and activation means 15 in an on/off kind of way, at full speed, during a predetermined amount of time, e.g. number of motor pulses, resulting in a dispense profile having a constant maximum dispense rate φ during some intervals and an output of zero during the intermediate intervals, as illustrated in FIG. 6 by S₁ and S₂.

According to a more advanced control strategy the dispense rate φ may be gradually varied in time, as illustrated in FIG. 6 by profiles S₃ or S₄. This may be achieved by running the motor 16 and activating means 15 at full speed at the start of a treatment session and slowly reduce the motor frequency during the remainder of the session. Alternatively, if the activating means 15 are replaced by the piezoelectric element 25 of FIG. 4, the same result may be achieved by slowly reducing the stroke and/or frequency of the induced deformation.

In yet another embodiment the control strategy may comprise a feedback loop, including proportional and/or differentiating and/or integrating control action. The outputted dispense rate φ or a parameter related thereto (moistness ofbodypart, friction) is measured and compared to the desired value defined by the predetermined dispense profile Sₓ. In case of a deviation, the frequency and/or stroke of the activating means 15, 25 is adjusted to reduce said deviation.

The appliance 1 may further comprise communication means like a screen or LED's, to inform the consumer regarding for instance the available dispense profiles Sₓ, the status of the selected dispense program or the amount additive left in the reservoir 10. Furthermore, the means 13 for manually activating the dispense means 12 are preferably designed to overrule the automatic control means 20, thus giving a user the feeling that he is in charge, at all times.

The above described appliance 1 according to the invention offers the advantage that a user can have additive dispensed automatically during a treatment session, without sacrificing the freedom of adjusting the dispense rate to personal needs, thanks to the predetermine dispense profile which can be fully tailored to each specific user's needs. The invention is not limited to the exemplary embodiments shown in the description and the figures. Many variations thereof are possible within the scope of the invention as outlined in the claims.

For instance, other pumps can be applied, for instance a piston, whereby the reservoir may be configured as cylinder. More than one particular additive can be dispensed, simultaneously or in sequence, in which case the appliance may comprise several reservoirs or one reservoir that is divided in several compartments, and the dispense means are adapted accordingly, so as to be able to dispense additive from the various reservoir. The or each reservoir and dispense means can at least partly be disposed outside the appliance. A drip-stop may be provided, preventing the dispensing means from dripping additive after they have been shut down by the control means.

These and many comparable variations are understood to fall within the scope of the invention as outlined in following claims.

## Claims

1. Personal care appliance (1) for treatment of a body part, such as skin, teeth or hair, comprising a reservoir (10) for holding an additive, dispense means (12) for dispensing said additive onto the body part to be treated, and control means (20) for controlling the dispense means (12), wherein the control means (20) are arranged for automatically controlling the dispense means (12) to dispense the additive according to a predetermined dispense profile (Sₓ), which profile is based on a user's needs and/or the conditions under which the appliance (1) is used, **characterized in that** selection means (13) are provided for enabling a user to select a predetermined dispense profile (Sₓ) and/or to input specific data on the basis whereof the automatic control means (20) can select and/or adjust a predetermined dispense profile (Sₓ).

2. Appliance according to claim 1, wherein the automatic control means (20) comprise sufficient memory capacity to store several predetermined dispense profiles (Sₓ), each adapted for different users and/or different use conditions.

3. Appliance according to any one of the preceding claims, wherein the automatic control means (20) are freely programmable.

4. Appliance according to any one of the preceding claims, wherein the automatic control means (20) are self learning.

5. Appliance according to any one of the preceding claims, wherein the automatic control means (20) comprise a micro controller.

6. Appliance according to any one of the preceding claims, wherein manual control means (13) are provided for manually controlling the dispense means (12).

7. Appliance according to any one of the preceding claims, wherein interruption means (13) are provided, for having the automatic control means (20) either restart or resume a dispense profile (Sₓ) after an interruption in the execution of said profile.

8. Appliance according to any one of the preceding claims, wherein the dispense means (12) comprise a pump (14) and activating means (15) for activating said pump (14), wherein the automatic control means (20) are arranged for controlling the frequency and/or stroke of said activating means (15) in order to control the dispense rate (φ) of the dispense means (12).

9. Appliance according to claim 8, wherein the activating means (15) comprises a piezoelectric element (25).

10. Appliance according to any one of the preceding claims, wherein the dispense means (12) comprise a valve and the automatic control means (20) are arranged for controlling the opening thereof to control the dispense rate (φ).

11. Appliance according to any one of the preceding claims, wherein the control means (20) furthermore comprise a timer, generating time units of a specific length, wherein the or each dispense profile (Sₓ) is expressed as a function of said time units, and wherein the dispense rate (φ) is controlled by alternately activating and deactivating the dispense means (12) during a number of said time units as determined by the dispense profile (Sₓ).

12. Appliance according to any one of the preceding claims, furthermore comprising a switch (13) for activating and deactivating the automatic control means (20), manually or through contact with the body part to be treated.

13. Appliance according to any one of the preceding claims, wherein communication means are provided, such as an interface, for instance a screen or one or more LEDs, for informing the user, for instance regarding the available dispense profiles (Sₓ) or the status of a selected dispense profile.

14. Appliance according to any one of the preceding claims, comprising an indicator for informing a user regarding the amount of additive left and/or warning a user when the reservoir (10) runs empty.

15. Appliance according to any one of the preceding claims, wherein the additive is contained in a disposable cartridge, adapted for being received in the reservoir (10).

16. Appliance according to any one of the preceding claims, wherein the personal care appliance (1) is one of the following:
- a hair removing apparatus, in particular a depilation and/or epilating apparatus, wherein the additive to be dispensed is for instance a shaving lotion or gel; or
- a brush, in particular a toothbrush, wherein the additive to be dispensed is for instance a toothpaste or polishing agent; or
- a hairstyler, wherein the additive to be dispensed is a hairstyling product, such as steam, wax, shampoo or a dye.

## Patentansprüche

1. Gerät zur persönlichen Pflege (1) zur Behandlung eines Körperteils, wie der Haut, der Zähne oder der Haare, mit einem Behälter (10) zum Enthalten eines Additivs, mit Spendermitteln (12) zum Spenden des genannten Additivs auf den zu behandelnden Körperteil, und mit Steuermitteln (20) zur Steuerung der Spendermittel (12), wobei die Steuermittel dazu vorgesehen sind, die Spendermittel (12) automatisch zu steuern, und zwar zum Spenden des Additivs entsprechend einem vorbestimmten Spenderprofil (Sₓ), wobei dieses Profil auf den Bedürfnissen und/oder den Bedingungen, unter denen das Gerät (1) verwendet wird, basiert, **dadurch gekennzeichnet, dass** Selektionsmittel (13) vorgesehen sind, durch die einem Benutzer die Möglichkeit geboten wird, ein vorbestimmtes Spenderprofil (Sₓ) zu selektieren und/oder spezifische Daten über die Basis, auf der die automatischen Steuermittel (20) selektieren können, und/oder ein vorbestimmtes Spenderprofil (Sₓ) einzugeben.

2. Gerät nach Anspruch 1, wobei die automatischen Steuermittel (20) genügend Speicherkapazität aufweisen um verschiedene vorbestimmte Spenderprofile (Sₓ) zu enthalten, die je an verschiedene Benutzer und/oder verschiedene Verwendungsumstände angepasst sind.

3. Gerät nach einem der vorstehenden Ansprüche, wobei die automatischen Steuermittel (20) frei programmierbar sind.

4. Gerät nach einem der vorstehenden Ansprüche, wobei die automatischen Steuermittel (20) selbst lernend sind.

5. Gerät nach einem der vorstehenden Ansprüche, wobei die automatischen Steuermittel (20) einen Mikrocontroller aufweisen.

6. Gerät nach einem der vorstehenden Ansprüche, wobei Handsteuermittel (13) vorgesehen sind, und zwar zur manuellen Steuerung der Spendermittel (12).

7. Gerät nach einem der vorstehenden Ansprüche, wobei Unterbrechungsmittel (13) vorgesehen sind, damit die automatischen Steuermittel (20) nach einer Unterbrechung des genannten Profils entweder neu aufstarten oder ein Spenderprofil (Sₓ) fortsetzen.

8. Gerät nach einem der vorstehenden Ansprüche, wobei die Spendermittel (12) eine Pumpe (14) und Betätigungsmittel (15) zur Betätigung der genannten Pumpe (14) aufweisen, wobei die automatischen Steuermittel (20) dazu vorgesehen sind, die Frequenz und/oder den Hub der genannten Betätigungsmittel (15) zu steuern, damit die Spenderfrequenz (Φ) der Spendermittel gesteuert wird.

9. Gerät nach Anspruch 8, wobei die Betätigungsmittel (15) ein piezoelektrisches Element (25) enthalten.

10. Gerät nach einem der vorstehenden Ansprüche, wobei die Spendermittel (12) ein Ventil aufweisen und die automatischen Steuermittel (20) dazu vorgesehen sind, das Öffnen des Ventils zu steuern, und zwar zur Steuerung der Spenderfrequenz (Φ).

11. Gerät nach einem der vorstehenden Ansprüche, wobei die Steuermittel (20) weiterhin einen Zeitgeber aufweisen, der Zeiteinheiten einer bestimmten Länge erzeugt, wobei das oder jedes Spenderprofil (Sₓ) als eine Funktion der genannten Zeiteinheiten ausgedrückt wird, und wobei die Spenderfrequenz (Φ) dadurch gesteuert wird, dass die Spendermittel (12) während einer Anzahl der genannten Zeiteinheiten aktiviert und deaktiviert werden, wie durch das Spenderprofil (Sₓ) bestimmt.

12. Gerät nach einem der vorstehenden Ansprüche, das weiterhin einen Schalter (13) aufweist, und zwar zum Aktivieren und Deaktivieren der automatischen Steuermittel (20), und zwar von Hand oder durch Kontakt mit dem zu behandelnden Körperteil.

13. Gerät nach einem der vorstehenden Ansprüche, wobei Kommunikationsmittel, wie eine Schnittstelle, beispielsweise ein Schirm oder eine oder mehrere LEDs vorgesehen sind, und zwar zum Informieren des Benutzers, beispielsweise in Bezug auf die verfügbaren Spenderprofile (Sₓ) oder über den Zustand eines selektierten Spenderprofils.

14. Gerät nach einem der vorstehenden Ansprüche, das einen Indikator aufweist, mit dem ein Benutzer in Bezug auf den Restbetrag an Additiv und/oder eine Warnung erhält, wenn der Behälter (10) fast leer ist.

15. Gerät nach einem der vorstehenden Ansprüche, wobei das Additiv in einer Einwegpatrone enthalten ist, die in den Behälter (10) passt.

16. Gerät nach einem der vorstehenden Ansprüche, wobei das Gerät zur Körperpflege (1) Folgendes sein kann:
- ein Haarentfernungsgerät, insbesondere ein Enthaarungs- und/oder ein Epiliergerät, wobei das zu spendende Additiv beispielsweise eine Rasierlotion oder ein Rasiergel ist; oder
- eine Bürste, insbesondere eine Zahnbürste, wobei das zu spendende Additiv beispielsweise eine Zahnpaste oder ein Zahnpoliermittel ist; oder
- ein Haarstyler, wobei das zu spendende Additiv ein Haarstylingprodukt, wie Dampf, Wachs, Shampoo oder Farbstoff ist.

## Revendications

1. Ustensile d'hygiène corporelle (1) pour le traitement d'une partie du corps, telle que la peau, les dents ou les cheveux (les poils), comprenant un réservoir (10) pour retenir un additif, des moyens de distribution (12) pour distribuer ledit additif sur la partie du corps à traiter et des moyens de commande (20) pour commander les moyens de distribution (12), dans lequel les moyens de commande (20) sont agencés de manière à commander automatiquement les moyens de distribution (12) pour distribuer l'additif selon un profil de distribution prédéterminé (Sₓ), lequel profil est basé sur les besoins d'un utilisateur et/ou sur les conditions sous lesquelles l'ustensile (1) est utilisé, **caractérisé en ce que** les moyens de sélection (13) sont fournis pour permettre à un utilisateur de sélectionner un profil de distribution prédéterminé (Sₓ) et/ou d'introduire des données spécifiques sur la base desquelles les moyens de commande automatique (20) peuvent sélectionner et/ou ajuster un profil de distribution prédéterminé (Sₓ).

2. Ustensile selon la revendication 1, dans lequel les moyens de commande automatique (20) comprennent une capacité de mémoire suffisante pour stocker plusieurs profils de distribution prédéterminés (Sₓ), chacun étant adapté à des utilisateurs différents et/ou à des conditions différentes d'utilisation.

3. Ustensile selon l'une quelconque des revendications précédentes 1 à 2, dans lequel les moyens de commande automatique (20) sont librement programmables.

4. Ustensile selon l'une quelconque des revendications précédentes 1 à 3, dans lequel les moyens de commande automatique (20) sont auto-éducatifs.

5. Ustensile selon l'une quelconque des revendications précédentes 1 à 4, dans lequel les moyens de commande automatique (20) comprennent un micro-contrôleur.

6. Ustensile selon l'une quelconque des revendications précédentes 1 à 5, dans lequel les moyens de commande manuelle (13) sont fournis pour commander manuellement les moyens de distribution (12).

7. Ustensile selon l'une quelconque des revendications précédentes 1 à 6, dans lequel des moyens d'interruption (13) sont fournis pour permettre aux moyens de commande automatique (20) ou bien de redémarrer ou bien de reprendre un profil de distribution (Sₓ) après une interruption dans l'exécution dudit profil.

8. Ustensile selon l'une quelconque des revendications précédentes 1 à 7, dans lequel les moyens de distribution (12) comprennent une pompe (14) et des moyens d'activation (15) pour activer ladite pompe (14) où les moyens de commande automatique (20) sont agencés de manière à commander la fréquence et/ou la course desdits moyens d'activation (15) afin de commander le taux de distribution (φ) des moyens de distribution (12).

9. Ustensile selon la revendication 8, dans lequel les moyens d'activation (15) comprennent un élément piézo-électrique (25).

10. Ustensile selon l'une quelconque des revendications précédentes 1 à 9, dans lequel les moyens de distribution (12) comprennent une valve et les moyens de commande automatique (20) sont agencés de manière à commander l'ouverture de celle-ci pour commander le taux de distribution (φ).

11. Ustensile selon l'une quelconque des revendications précédentes 1 à 10, dans lequel les moyens de commande automatique (20) comprennent encore une minuterie, générant des unités de temps d'une longueur spécifique, où le ou chaque profil de distribution (Sₓ) est exprimé en fonction desdites unités de temps et où l'on commande le taux de distribution (φ) en activant et en désactivant alternativement les moyens de distribution (12) pendant un certain nombre desdites unités de temps, comme déterminé par le profil de distribution (Sₓ).

12. Ustensile selon l'une quelconque des revendications précédentes 1 à 11, comprenant encore un commutateur (13) pour activer et pour désactiver les moyens de commande automatique (20) manuellement ou par contact avec la partie du corps à traiter.

13. Ustensile selon l'une quelconque des revendications précédentes 1 à 12, dans lequel sont fournis les moyens de communication, tels qu'une interface, par exemple, un écran ou une ou plusieurs diodes électroluminescentes, pour informer l'utilisateur, par exemple, des profils de distribution disponibles (Sₓ) ou de l'état d'un profil de distribution sélectionné.

14. Ustensile selon l'une quelconque des revendications précédentes 1 à 13, comprenant un indicateur pour informer un utilisateur de la quantité d'additif qui reste et/ou pour avertir un utilisateur lorsque le réservoir (10) se vide.

15. Ustensile selon l'une quelconque des revendications précédentes 1 à 14, dans lequel l'additif est contenu dans une cartouche jetable qui est adaptée à être reçue dans le réservoir (10).

16. Ustensile selon l'une quelconque des revendications précédentes 1 à 15, dans lequel l'ustensile d'hygiène corporelle (1) est un des suivants:
- un appareil d'enlèvement de poils, en particulier un appareil dépilatoire et/ou épilatoire, dans lequel l'additif à distribuer est, par exemple, une lotion ou un gel de rasage; ou
- une brosse, en particulier une brosse à dents, dans laquelle l'additif à distribuer est, par exemple, une pâte dentifrice ou un agent de polissage; ou
- un dispositif électrique de coiffure dans lequel l'additif à distribuer est un produit de coiffure, tel que, de la vapeur, de la cire, du shampoing ou une teinture.
